(19) Europäisches Patentamt
European Patent Office
Office européen des brevets

(11) **EP 4 632 549 A1**

(12) **EUROPEAN PATENT APPLICATION**
published in accordance with Art. 153(4) EPC

(43) Date of publication:
**15.10.2025 Bulletin 2025/42**

(21) Application number: **23909274.5**

(22) Date of filing: **31.08.2023**

(51) International Patent Classification (IPC):
*G06F 3/06* (2006.01)

(52) Cooperative Patent Classification (CPC):
**G06F 3/06;** Y02D 10/00

(86) International application number:
**PCT/CN2023/116079**

(87) International publication number:
**WO 2024/139336 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2022 CN 202211737093**

(71) Applicant: **xFusion Digital Technologies Co., Ltd.
Zhengzhou, Henan 450000 (CN)**

(72) Inventors:
• **HONG, Chao
Zhengzhou, Henan 450000 (CN)**
• **YU, Weisheng
Zhengzhou, Henan 450000 (CN)**

(74) Representative: **MERH-IP Matias Erny Reichl
Hoffmann
Patentanwälte PartG mbB
Paul-Heyse-Straße 29
80336 München (DE)**

(54) **METHOD FOR IMPROVING WRITE PERFORMANCE OF MIRRORED REDUNDANT ARRAY OF DISKS RAID 5, AND DEVICE**

(57) Embodiments of the present application disclose a method for improving write performance of a mirrored redundant array of independent disks configuration that uses disk striping with parity RAID5 and a device. The method includes: acquiring a data write request, where the data write request carries one or more pieces of data to be written and a hard disk location to be written corresponding to each piece of data to be written; and in response to the data write request, writing the one or more pieces of data to be written into the hard disk location to be written corresponding to each piece of data to be written, and adjusting data bit state information corresponding to each hard disk location to be written. By modifying a data write action of the RAID5 to a write-through action, the write performance of the RAID5 is optimized and enhanced.

Acquire a data write request, where the data write request carries one or more pieces of data to be written and a hard disk location to be written corresponding to each piece of data to be written. — S801

In response to the data write request, write the one or more pieces of data to be written into the hard disk location to be written corresponding to each piece of data to be written, and adjust data bit state information corresponding to each hard disk location to be written. — S802

FIG. 8

EP 4 632 549 A1

## Description

This application claims priority to Chinese Patent Application No. 202211737093.7, filed with the China National Intellectual Property Administration on December 30, 2022.and entitled "METHOD FOR IMPROVING WRITE PERFORMANCE OF MIRRORED REDUNDANT ARRAY OF INDEPENDENT DISKS CONFIGURATION THAT USES DISK STRIPING WITH PARITY RAIDS AND DEVICE", which is incorporated herein by reference in its entirety.

## TECHNICAL FIELD

The present application relates to the field of information technology, and in particular to a method for improving write performance of a mirrored redundant array of independent disks configuration that uses disk striping with parity RAIDS and a device.

## BACKGROUND

Currently, a mirrored Redundant Array of Independent Disks Configuration That Uses Disk Striping with Parity (Redundant Array of Independent Disks Configuration That Uses Disk Striping with Parity, RAIDS) is widely used in the field of information technology. In business scenarios where hard disks are used in the information technology field, the use of a RAIDS combination is unavoidable. The RAIDS are widely applied in areas such as storage, computing, and secure backup. The RAIDS is formed by at least three hard disks and is a redundant array of independent disks balancing read/write scenarios.

As a redundant array of independent disks, the RAIDS uses a "parity checking" algorithm for data writing (data reading operates similarly to others). In each RAIDS write operation, new parity data is computed using new data and data from all other member disks, resulting in low efficiency for data writing.

## SUMMARY

Embodiments of the present application provide a method for improving write performance of a mirrored redundant array of independent disks configuration that uses disk striping with parity RAID 5 and a device, optimizing and enhancing the write performance of the RAIDS by modifying a data write action of the RAIDS to a write-through action.

In a first aspect, embodiments of the present application provide a method for improving write performance of a mirrored redundant array of independent disks configuration that uses disk striping with parity RAIDS, applied to a control unit, where the control unit is configured in a computing device, and the method includes:

acquiring a data write request, where the data write request carries one or more pieces of data to be written and a hard disk location to be written corresponding to each piece of data to be written; and

in response to the data write request, writing the one or more pieces of data to be written into the hard disk location to be written corresponding to each piece of data to be written, and adjusting data bit state information corresponding to each hard disk location to be written.

The embodiments of the present application optimize and enhance the write performance of the RAIDS by modifying the data write action of the RAIDS to the write-through action.

Furthermore, the data bit state information includes hard disk state information and flag bit state information; where after adjusting the data bit state information corresponding to each hard disk location to be written, the method includes:

after writing the one or more pieces of data to be written into the hard disk location to be written corresponding to each piece of data to be written, acquiring a number of times data is written into each hard disk location to be written, and adjusting the hard disk state information corresponding to each hard disk location to be written, where the hard disk state information corresponding to each hard disk location to be written is configured to indicate that each hard disk location to be written has been used; and

adjusting the hard disk state information and the flag bit state information corresponding to each hard disk location to be written based on the number of times data is written into each hard disk location to be written, where the flag bit state information corresponding to each hard disk location to be written is configured to indicate the number of times the data is written into each hard disk location to be written.

Furthermore, the data bit state information includes hard disk state information and flag bit state information, where after adjusting the data bit state information corresponding to the hard disk location to be written, the method further includes:

acquiring hard disk state information of a plurality of hard disk locations corresponding to each hard disk in the RAID5 and flag bit state information of a flag bit corresponding to each hard disk location; and

performing a correction process on a parity bit corresponding to each stripe based on each piece of hard disk state information and each piece of flag bit state information, where each piece of hard disk state information is configured to indicate that each hard disk location has been used and indicate data written into the hard disk location; and after performing the correction process on the parity bit, performing a clearing process on the flag bit state information of the flag bit.

Furthermore, performing the correction process on the parity bit corresponding to each stripe based on each piece of hard disk state information and each piece of flag bit state information, includes:

determining a target correction strategy for performing the correction process on the parity bit corresponding to each stripe based on each piece of hard disk state information and each piece of flag bit state information; and

performing the correction process on the parity bit corresponding to each stripe based on the target correction strategy.

Furthermore, determining the target correction strategy for performing the correction process on the parity bit corresponding to each stripe based on each piece of hard disk state information and each piece of flag bit state information, includes:

determining a load rate of the RAID5 based on each piece of hard disk state information, and determining a first correction strategy based on the load rate;

acquiring a count of each flag bit based on a first preset interval time cycle, and determining a second correction strategy based on the acquired count of each flag bit; and

determining the target correction strategy for performing the correction process on the parity bit corresponding to each stripe based on the first correction strategy and the second correction strategy.

Furthermore, determining the first correction strategy based on the load rate, includes:

in a case that the load rate is less than or equal to a preset load threshold, determining a resource invoking rate in the RAID5 based on the load rate; and

based on the resource invoking rate, determining that the first correction strategy is to select an idle resource corresponding to the resource invoking rate from the RAID5 to perform the correction process on the parity bit corresponding to each stripe.

Furthermore, determining the first correction strategy based on the load rate, includes:

in a case that the load rate is greater than a preset load threshold, determining that the first correction strategy is to perform the correction process on the parity bit corresponding to a stripe while writing each piece of data to be written into the corresponding hard disk location to be written; or determining that the first correction strategy is to perform the correction process on the parity bit corresponding to each stripe by using a reserved fixed resource in the RAID5.

Furthermore, determining the second correction strategy based on the acquired count of each flag bit, the method includes:

determining count change information of each flag bit based on the acquired count of each flag bit; and

determining the second correction strategy based on the count change information of each flag bit.

Furthermore, determining the second correction strategy based on the count change information of each flag bit, includes:

in a case of determining one or more stripes with continuously written data based on the count change information of each flag bit, determining that the second correction strategy is to perform the correction process on a parity bit corresponding to each stripe with the continuously written data by using an original correction strategy in the RAID5 within a preset time, where the original correction strategy is to perform the correction process on the parity bit while writing data.

Furthermore, determining the second correction strategy based on the count change information of each flag bit, includes:

in a case of determining one or more stripes with non-continuously written data based on the count change information of each flag bit, determining that the second correction strategy is to perform the correction process on the parity bit corresponding to each stripe with the non-continuously written data based on a second preset interval time cycle.

Furthermore, determining the second correction strategy based on the count change information of each flag bit, includes:

in a case of determining, based on the count change information of each flag bit, that a count of data written to each stripe within a preset time range is less than a preset count threshold, determining that the second correction strategy is to perform the correction process on the parity bit corresponding to each stripe while reading data.

Furthermore, the method further includes:

in a case of determining that a hard disk is faulty, acquiring the flag bit state information corresponding to each hard disk location in each stripe, and performing a correction process on a parity bit corresponding to a stripe where the flag bit state information is not 0.

Furthermore, a writing module 1502 is further configured to:

in a case of determining that a write abnormality occurs in a hard disk, trigger a remapping of the hard disk and store remapped flag bit data to a flag bit corresponding to the hard disk.

Furthermore, the writing module 1502 is further configured to:

when correcting each parity bit, acquire a count of each flag bit, and acquire a non-zero flag bit based on the count of each flag bit;

acquire data of all hard disk locations in a stripe where a hard disk location corresponding to the non-zero flag bit is located and parity data of the parity bit corresponding to the stripe; and

calculate new parity data based on the data of all the hard disk locations in the stripe and the parity data of the parity bit corresponding to the stripe, rewrite the new parity data into the parity bit, and simultaneously perform a clearing process on the count of the flag bit.

The present application ensures data consistency and reliability by dynamically correcting the parity bit based on data bit state information of the RAIDS and resources of the RAIDS itself, and improves flexibility of data processing while ensuring data reliability by applying different correction strategies for each parity bit under various circumstances.

In a second aspect, embodiments of the present application provide an apparatus for improving write performance of a mirrored redundant array of independent disks configuration that uses disk striping with parity RAIDS, including:

an acquiring module, configured to acquire a data write request, where the data write request carries one or more pieces of data to be written and a hard disk location to be written corresponding to each piece of data to be written; and

a writing module, configured to, in response to the data write request, write the one or more pieces of data to be written into the hard disk location to be written corresponding to each piece of data to be written, and adjust data bit state information corresponding to each hard disk location to be written.

Furthermore, the data bit state information includes hard disk state information and flag bit state information; and when the writing module adjusts the data bit state information corresponding to each hard disk location to be written, the writing module is specifically configured to:

after writing the one or more pieces of data to be written into the hard disk location to be written corresponding to each piece of data to be written, acquire a number of times data is written into each hard disk location to be written, and adjust the hard disk state information corresponding to each hard disk location to be written, where the hard disk state information corresponding to each hard disk location to be written is configured to indicate that each hard disk location to be written has been used; and

adjust the hard disk state information and the flag bit state information corresponding to each hard disk location to be written based on the number of times the data is written into each hard disk location to be written, where the flag bit state information corresponding to each hard disk location to be written is configured to indicate the number of times the data is written into each hard disk location to be written.

Furthermore, the data bit state information includes hard disk state information and flag bit state information; and after the writing module adjusts the data bit state information corresponding to the hard disk location to be written, the writing module is further configured to:

acquire hard disk state information of a plurality of hard disk locations corresponding to each hard disk in the RAIDS and flag bit state information of a flag bit corresponding to each hard disk location; and

perform a correction process on a parity bit corresponding to each stripe based on each piece of hard disk state information and each piece of flag bit state information, where each piece of hard disk state information is configured to indicate that each hard disk location has been used and indicate data written into the hard disk location; and after performing the correction process on the parity bit, perform a clearing process on the flag bit state information of the flag bit.

Furthermore, when the writing module performs the correction process on the parity bit corresponding to each stripe based on each piece of hard disk state information and each piece of flag bit state information, the writing module is specifically configured to:

determine a target correction strategy for performing the correction process on the parity bit corresponding to each stripe based on each piece of hard disk state information and each piece of flag bit state information; and
perform the correction process on the parity bit corresponding to each stripe based on the target correction strategy.

Furthermore, when the writing module determines the target correction strategy for performing the correction process on the parity bit corresponding to each stripe based on each piece of hard disk state information and each piece of flag bit state information, the writing module is specifically configured to:

determine a load rate of the RAID5 based on each piece of hard disk state information, and determine a first correction strategy based on the load rate;
acquire a count of each flag bit based on a first preset interval time cycle, and determine a second correction strategy based on the acquired count of each flag bit; and
determine the target correction strategy for performing the correction process on the parity bit corresponding to each stripe based on the first correction strategy and the second correction strategy.

Furthermore, when the writing module determines the first correction strategy based on the load rate, the writing module is specifically configured to:

in a case that the load rate is less than or equal to a preset load threshold, determine a resource invoking rate in the RAID5 based on the load rate; and
based on the resource invoking rate, determine that the first correction strategy is to select an idle resource corresponding to the resource invoking rate from the RAID5 to perform the correction process on the parity bit corresponding to each stripe.

Furthermore, when the writing module determines the first correction strategy based on the load rate, the writing module is specifically configured to:
in a case that the load rate is greater than a preset load threshold, determine that the first correction strategy is to perform the correction process on the parity bit corresponding to each stripe while writing each piece of data to be written into the corresponding hard disk location to be written; or determine that the first correction strategy is to perform the correction process on the parity bit corresponding to each stripe by using a reserved fixed resource in the RAID5.
Furthermore, when the writing module determines the second correction strategy based on the acquired count of each flag bit, the writing module is specifically configured to:

determine count change information of each flag bit based on the acquired count of each flag bit; and
determine the second correction strategy based on the count change information of each flag bit.

Furthermore, when the writing module determines the second correction strategy based on the count change information of each flag bit, the writing module is specifically configured to:
in a case of determining one or more stripes with real-time written data based on the count change information of each flag bit, determine that the second correction strategy is to perform the correction process on a parity bit corresponding to each stripe with the real-time written data by using an original correction strategy in the RAID5 within a preset time, where the original correction strategy is to perform the correction process on the parity bit while writing data.
Furthermore, when the writing module determines the second correction strategy based on the count change information of each flag bit, the writing module is specifically configured to:
in a case of determining one or more stripes with non-continuously written data based on the count change information of each flag bit, determine that the second correction strategy is to perform the correction process on the parity bit corresponding to each stripe with the non-continuously written data based on a second preset interval time cycle.
Furthermore, when the writing module determines the second correction strategy based on the count change information of each flag bit, the writing module is specifically configured to:
in a case of determining, based on the count change information of each flag bit, that a count of data written to each stripe within a preset time range is less than a preset count threshold, determine that the second correction strategy is to perform the correction process on the parity bit corresponding to each stripe while reading data.

Furthermore, the writing module is further configured to:

in a case of determining that a hard disk is faulty, acquire the flag bit state information corresponding to each hard disk location in each stripe, and perform a correction process on a parity bit corresponding to a stripe where the flag bit state information is not 0.

Furthermore, the writing module is further configured to:

in a case of determining that a write abnormality occurs in a hard disk, trigger a remapping of the hard disk and store remapped flag bit data to a flag bit corresponding to the hard disk.

Furthermore, the writing module is further configured to:

when correcting each parity bit, acquire a count of each flag bit, and acquire a non-zero flag bit based on the count of each flag bit;

acquire data of all hard disk locations in a stripe where a hard disk location corresponding to the non-zero flag bit is located and parity data of the parity bit corresponding to the stripe; and

calculate new parity data based on the data of all the hard disk locations in the stripe and the parity data of the parity bit corresponding to the stripe, rewrite the new parity data into the parity bit, and simultaneously perform a clearing process on the count of the flag bit.

In a third aspect, embodiments of the present application provide a computing device, including: a processor and a memory connected to the processor, where the memory is configured to store a computer program, the computer program includes a program instruction, and the processor is configured to invoke the program instruction to perform the method according to the first aspect.

The present application optimizes and enhances the performance of the RAIDS by modifying the data write action of the RAIDS to the write-through action, and dynamically corrects the parity bit based on the data bit state information of the RAIDS and resources of the RAIDS itself, ensuring the data consistency and reliability.

**BRIEF DESCRIPTION OF DRAWINGS**

FIG. 1 is a schematic diagram of a processing method of RAIDS data writing according to an embodiment of the present application;

FIG. 2 is a schematic diagram of another processing method of RAIDS data writing according to an embodiment of the present application;

FIG. 3 is a schematic diagram of another processing method of RAIDS data writing according to an embodiment of the present application;

FIG. 4 is a schematic diagram of a RAIDS data writing according to an embodiment of the present application;

FIG. 5 is a schematic diagram of another RAIDS data writing according to an embodiment of the present application;

FIG. 6 is a schematic diagram of another RAIDS data writing according to an embodiment of the present application;

FIG. 7 is a schematic diagram of another RAIDS data writing according to an embodiment of the present application;

FIG. 8 is a schematic flowchart of a method for improving write performance of RAIDS according to an embodiment of the present application;

FIG. 9 is a schematic flowchart of another method for improving write performance of RAIDS according to an embodiment of the present application;

FIG. 10 is a schematic diagram of flag bit information according to an embodiment of the present application;

FIG. 11 is a schematic diagram of flag bit information when non-continuously writing data according to an embodiment of the present application;

FIG. 12 is a schematic diagram of flag bit information when data reading is dominant according to an embodiment of the present application;

FIG. 13 is a schematic diagram of flag bit information when continuously writing data according to an embodiment of the present application;

FIG. 14 is a schematic flowchart of another method for improving write performance of RAIDS according to an embodiment of the present application;

FIG. 15 is a structural diagram of an apparatus for improving write performance of a mirrored redundant array of independent disks configuration that uses disk striping with parity RAIDS according to an embodiment of the present application; and

FIG. 16 is a structural diagram of a computing device according to an embodiment of the present application.

**DESCRIPTION OF EMBODIMENTS**

The following clearly describes technical solutions in embodiments of the present application in combination with accompanying drawings of the embodiments of the present application. Apparently, the described embodiments are some but not all of the embodiments of the present application. Based on the embodiments of the present application, all other embodiments obtained by those skilled in the art without creative efforts fall within the protection scope of the present application.

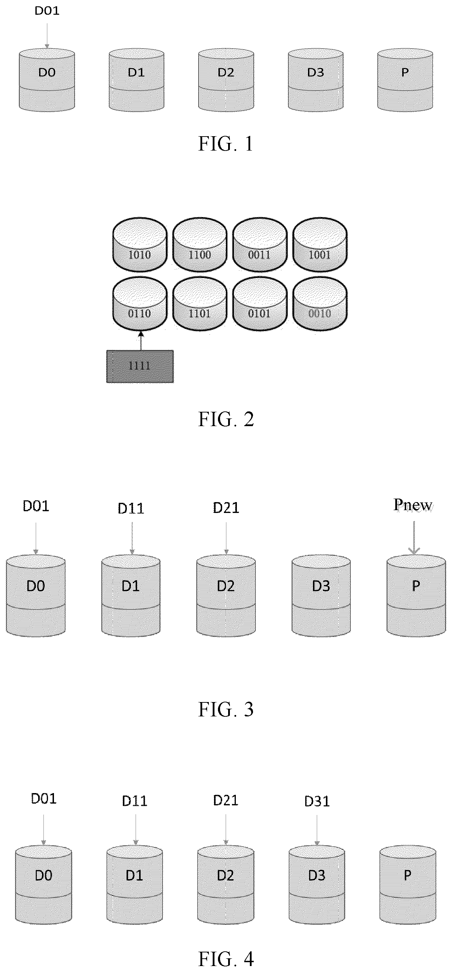

Before technical solutions proposed in the present application are described, relevant information about RAIDS is explained in combination with FIGS. 1 to 7.

RAIDS is a redundant array of independent disks for data storage. The RAIDS consists of at least three hard disks, and each hard disk includes a plurality of hard disk locations. Based on a hard disk location of each hard disk, a plurality of stripes may be determined, and each stripe includes a hard disk location from each hard disk. In each stripe, any one hard disk location may serve as a parity bit, and be used for storing parity data (i.e., a parity check code) obtained from a parity check. Parity bits of all stripes may be different hard disk locations on a same hard disk or hard disk locations on different hard disks, which are not specifically limited here. A plurality of remaining hard disk locations serve as data disks and are used for storing data. Using the RAIDS to store data can prevent data loss caused due to a hard disk damage that occurs when data is stored in a single hard disk. See Table 1 for details.

Table 1

| Hard Disk 1 | Hard Disk 2 | Hard Disk 3 | |
|---|---|---|---|
| DO | D1 | D2 | Stripe 0 |
| D00 | D01 | D02 | Stripe 1 |
| D000 | D001 | D002 | Stripe 2 |

As shown in Table 1, hard disk locations of a hard disk 1 include D0, D00, D000; hard disk locations of a hard disk 2 include D1, D01, D001; and hard disk locations of a hard disk 3 include D2, D02, D002. Among them, the hard disk locations D0, D1, and D2 form a stripe 0; the hard disk locations D00, D01, and D02 form a stripe 1; and the hard disk locations D000, D001, and D002 form a stripe 2. Capacities of hard disk locations that form a single stripe may be the same. For example, in Table 1, capacities of the hard disk locations that form the stripe 0 (i.e., D0, D1, and D2) may all be 64K. Capacities of the hard disk locations that form a single stripe may be different. For example, in Table 1, a capacity of the hard disk location D0 may be 64K, a capacity of the hard disk location D1 may be 128K, and a capacity of the hard disk location D2 may be 192K, where the hard disk locations D0, D1, and D2 form the stripe 0. Capacities of hard disk locations within a same hard disk may be the same or different. For example, as shown in Table 1, for the hard disk 1, capacities of hard disk locations D0 and D000 may both be 64K, and a capacity of a hard disk location D00 may be 32K. Capacities of all stripes are the same. For example, a capacity of the stripe 0 is equal to a capacity of the stripe 1 and equal to a capacity of the stripe 2, that is to say, capacity of D0 + capacity of D1 + capacity of D2 = capacity of D00 + capacity of D01 + capacity of D02 = capacity of D000 + capacity of D001 + capacity of D002.

Based on a relationship between a size of data to be written and a stripe size, the RAIDS may generally be optimized into three processing methods: small write, large write, and full-stripe write. The three processing methods are as follows:

Small write: When a quantity of stripe units required to be occupied by a data amount to be written is less than (that is, less than) half of a quantity of member disks in RAIDS group (that is, all hard disks that form the RAID5), small write is generally used. The small write processing method is as shown in FIG. 1, where the data to be written, DO1, is written into the hard disk location D0.

As shown in FIG. 2, FIG. 2 shows 8 hard disks, each displaying a hard disk location (target hard disk location). A last hard disk serves as a parity disk for storing parity data. Assume that data to be written on a target hard disk location of a fifth hard disk is 1111, an entire RAIDS write process may be divided into the following steps:

1. Read original data 0110 on the target hard disk location of the fifth hard disk, then perform an exclusive-or (XOR) operation with the data to be written 1111: 0110 XOR 1111 = 1001;
2. Read original parity data 0010 stored in a parity bit corresponding to the target hard disk location of the fifth hard disk on the parity disk (the last hard disk in FIG. 2);
3. Perform another XOR operation using a value calculated in step 1 and the original parity data: 0010 XOR 1001 = 1011; and
4. Then, write the data to be written 1111 into the target hard disk location of the fifth hard disk, and write new parity data calculated in step 3 into the parity bit corresponding to the target hard disk location of the fifth hard disk on the parity disk (the last hard disk in FIG. 2).

Large write: When the quantity of stripe units required to be occupied by the data to be written is greater than half of the quantity of member disks in the RAIDS group, large write is generally used. As shown in FIG. 3, the data to be written, DO1, needs to be written into a target hard disk location D0 of a first hard disk; data to be written, D11, needs to be written into a target hard disk location D1 of a second hard disk; and data to be written, D21, needs to be written into a target hard disk location D2 of a third hard disk. In this case, data in a target hard disk location D3 of a fourth hard disk, which has no data to be rewritten, needs to be read out. New parity data Pnew is calculated using an equation (1) below. Then, D01, D11, and D21 are written into their respective target hard disk locations, and Pnew is written into the parity disk (configured to store parity data).

$$D01 \ XOR \ D11 \ XOR \ D21 \ XOR \ D3 = Pnew \ (1)$$

where, XOR represents an exclusive-or operation.

Full-stripe write: Data in all member disks in the RAIDS group, except the parity disk, needs to be rewritten. As shown in FIG. 4, in addition to a parity disk P, the data to be written, D01, needs to be written into the target hard disk location D0 of the first hard disk; the data to be written, D11, needs to be written into the target hard disk location D1 of the second hard disk; the data to be written, D21, needs to be written into the target hard disk location D2 of the third hard disk; and data to be written, D31, need to be written into the target hard disk location D3 of the fourth hard disk. In this case, there is no need to read old data from the disks. New parity data Pnew may be directly calculated using the data to be written based on an equation (2) below. Then, DO1, D11, D21, and D31 are written into their respective target hard disk locations, and Pnew is written into the parity disk.

$$D01 \ XOR \ D11 \ XOR \ D21 \ XOR \ D31 = Pnew \ (2)$$

where, XOR represents an exclusive-or operation.

The RAIDS, due to a mechanism of calculating a parity bit, requires four steps: reading data, reading the parity bit, writing data, and writing the parity bit. Therefore, the RAIDS has a write penalty.

For example, in a RAIDS stripe with 7+1 (i.e., 7 hard disks storing data and 1 hard disk storing parity data), for a case of large write, assume that data to be written, 1101, needs to be written into the first hard disk location D0, the second hard disk location D1, the third hard disk location D2, and the fourth hard disk location D3. The entire RAIDS write process may be divided into the following steps:

1. Read original data 0110 on the first hard disk location D0, then perform an exclusive-or (XOR) operation with the data to be written 1101: 0110 XOR 1101 = 1011;
2. Read original data 1101 from the second hard disk location D1, then perform an exclusive-or (XOR) operation with the data to be written 1101: 1101 XOR 1101 = 0000;
3. Read original data 0101 from the third hard disk location D2, then perform an exclusive-or (XOR) operation with the data to be written 1101: 0101 XOR 1101 = 1000;
4. Read original data 0010 from the fourth hard disk location D3, then perform an exclusive-or (XOR) operation with the data to be written 1101: 0010 XOR 1101 = 1111;
5. Read parity data 0010 of an original parity bit from the parity disk;
6. Perform another exclusive-or (XOR) operation using values calculated in steps 1-4 and the original parity data: 0010 XOR 1011 XOR 0000 XOR 1000 XOR 1111 = 1110; and
7. Then, write the data to be written, 1101, into the hard disk locations D0, D1, D2, and D3, respectively, and write the new parity data 1110 calculated in step 6 into the parity disk.

It can be seen from the above steps that for any one data write operation, a storage side must perform a plurality of data readings and a plurality of data writings.

The present application optimizes performance for a write operation of RAIDS data by adopting a write-through approach, which means not performing operations of reading data and reading the parity bit, and directly operating data writing to achieve enhanced write performance. The parity bit is corrected based on the data bit state information.

In the present application, when creating the RAIDS, due to reserved space, a mapping relationship between the hard disk locations in the stripe of each disk and flag bits is established in reserved space of each disk. Specifically, as shown in Table 2, the RAIDS consists of five hard disks (that is, hard disk 0, hard disk 1, hard disk 2, hard disk 3, and hard disk 4). D0, ..., D... n are used to represent a plurality of hard disk locations corresponding to the hard disk 0, which is similar to other hard disks. Each row in Table 2 corresponds to a stripe, where any one hard disk location within each stripe may be selected as a parity bit corresponding to the stripe, and is used for storing the parity data. Each hard disk location corresponds to one flag bit. For example, a flag bit corresponding to the hard disk location D0 is D0'. When data has been written into a hard disk location, a count of the flag bit corresponding to the hard disk location is increased by 1. If data is written a plurality of times to the hard disk location, the flag bit corresponding to the hard disk location will maintain being cumulatively calculated. After the parity bit corresponding to the stripe is corrected, a flag bit corresponding to each hard disk location of the stripe is cleared.

For example, if data X is written into the hard disk location D0 of the hard disk 0 once, a count of a corresponding flag bit D0' is increased by 1. If data is written into other hard disks or other hard disk locations of a same hard disk 0, a corresponding flag bit is also counted. For example, if data Y is written into the hard disk location D00 of the hard disk 0, a count of the corresponding flag bit D00' is increased by 1.

Table 2

| Hard Disk 0 | Hard Disk 1 | Hard Disk 2 | Hard Disk 3 | Hard Disk 4 | ... |
|---|---|---|---|---|---|
| D0 | D1 | D2 | D3 | P0 | ... |
| D00 | D01 | D02 | P1 | D04 | ... |
| D000 | D001 | P2 | D003 | D004 | ... |
| D0000 | P3 | D0002 | D0003 | D0004 | ... |
| P4 | D00001 | D00002 | D00003 | D00004 | ... |
| ... | ... | ... | ... | ... | ... |
| D... n | D... n | D... n | D... n | D... n | ... |
| D0' | D1' | D2' | D3' | D04' | ... |
| D00' | D01' | D02 | D003' | D004' | ... |

For the RAID5 created based on different quantities of hard disks, a same design scheme is adopted. Corresponding flag bits are created through reserved space. A summarized design scheme is shown in Table 3, where each row in Table 3 forms a stripe, and any one of the hard disk locations in each stripe is selected to store parity data.

Table 3

| Hard Disk 0 | Hard Disk 1 | Hard Disk 2 | Hard Disk 3 | Hard Disk 4 | ... | Hard Disk N | Hard Disks That Form the RAID5 |
|---|---|---|---|---|---|---|---|
| D0 | D1 | D2 | D3 | P0 | ... | Dn | Striped data |
| D00 | D01 | D02 | P1 | D04 | ... | D0n | Striped data |
| D000 | D001 | P2 | D003 | D004 | ... | D00 n | Striped data |
| D0000 | P3 | D000 2 | D000 3 | D000 4 | ... | D00 On | Striped data |
| P4 | D000 01 | D000 02 | D000 03 | D000 04 | ... | D00 00n | Striped data |
| ... | ... | ... | ... | ... | ... | ... | ... |
| D... n | D... n | D... n | D... n | D... n | ... | D... n | Striped data |
| D0' | D1' | D2' | D3' | D04' | ... | Dn' | Reserved space |
| D00' | D01' | D02' | D003' | D004' | ... | D0n' | Reserved space |
| D000' | D001' | D000 2' | D000 3' | D000 4' | ... | D00 n' | Reserved space |
| D000 0' | D000 01' | D000 02' | D000 03' | D000 04' | ··· | D00 0n' | Reserved space |
| ... | ... | ... | ... | ... | ... | D00 00n' | ... |
| D... n' | D... n' | D... n' | D... n' | D... n' | ... | D... n' | Reserved space |

Situations for data writing may be categorized into following cases.

Case 1: In the RAID5, data is written N times to any one hard disk location of any one hard disk, and a count of a flag bit mapped in corresponding reserved space is N. For example, data is written N times to the hard disk location D0 of the hard disk 0, where latest written data is X, then a count of the flag bit D0' mapped in the corresponding reserved space is N, specifically as shown in Table 4.

Table 4

| Hard Disk 0 | Hard Disk 1 | Hard Disk 2 | Hard Disk 3 | Hard Disk 4 | Hard Disks That Form the RAID5 |
|---|---|---|---|---|---|
| X | D1 | D2 | D3 | P0 | Striped data |
| D00 | D01 | D02 | P1 | D04 | Striped data |
| D000 | D001 | P2 | D003 | D004 | Striped data |
| D0000 | P3 | D0002 | D0003 | D0004 | Striped data |
| P4 | D00001 | D00002 | D00003 | D00004 | Striped data |
| N | D1' | D2' | D3' | D04' | Reserved space |
| D00' | D01' | D02 | D003' | D004' | Reserved space |
| D000' | D001' | D0002 | D0003' | D0004' | Reserved space |
| D0000' | D00001' | D00002 | D00003' | D00004' | Reserved space |

Case 2: In the RAIDS, data is written into one hard disk location on each of any two hard disks. For example, data X is written into the hard disk location D0 of the hard disk 0 and data is written to D0 N times, then a count of the flag bit D0' mapped in the corresponding reserved space is N; and data is written N1 times to the hard disk location D1 of the hard disk 1, where the latest written data is X1, then a count of the flag bit D1' mapped in the corresponding reserved space is N1, specifically as shown in Table 5.

Table 5

| Hard Disk 0 | Hard Disk 1 | Hard Disk 2 | Hard Disk 3 | Hard Disk 4 | Hard Disks That Form the RAID5 |
|---|---|---|---|---|---|
| X | X1 | D2 | D3 | P0 | Striped data |
| D00 | D01 | D02 | P1 | D04 | Striped data |
| D000 | D001 | P2 | D003 | D004 | Striped data |
| D0000 | P3 | D0002 | D0003 | D0004 | Striped data |
| P4 | D00001 | D00002 | D00003 | D00004 | Striped data |
| N | N1 | D2' | D3' | D04' | Reserved space |
| D00' | D01' | D02 | D003' | D004' | Reserved space |
| D000' | D001' | D0002 | D0003' | D0004' | Reserved space |
| D0000' | D00001' | D00002 | D00003' | D00004' | Reserved space |

Case 3: In the RAIDS, data is written into any two hard disks, where one hard disk has a plurality of (two or more) hard disk locations with data written, and the other hard disk has one hard disk location with data written. For example, data is written N times to the hard disk location D0 of the hard disk 0, where the latest written data is X, then a count of the corresponding flag bit D0' is N; data is written N1 times to the hard disk location D1 of the hard disk 1, where the latest written data is X1, then a count of the flag bit D1' mapped in the corresponding reserved space is N1; and data is written N2 times to the hard disk location D00 of the hard disk 0, where the latest written data is X2, then a count of the flag bit D00' mapped in the corresponding reserved space is N2, specifically as shown in Table 6.

Table 6

| Hard Disk 0 | Hard Disk 1 | Hard Disk 2 | Hard Disk 3 | Hard Disk 4 | Hard Disks That Form the RAID5 |
|---|---|---|---|---|---|
| X | X1 | D2 | D3 | P0 | Striped data |
| X2 | D01 | D02 | P1 | D04 | Striped data |
| D000 | D001 | P2 | D003 | D004 | Striped data |

(continued)

| Hard Disk 0 | Hard Disk 1 | Hard Disk 2 | Hard Disk 3 | Hard Disk 4 | Hard Disks That Form the RAID5 |
|---|---|---|---|---|---|
| D0000 | P3 | D0002 | D0003 | D0004 | Striped data |
| P4 | D00001 | D00002 | D00003 | D00004 | Striped data |
| N | N1 | D2' | D3' | D04' | Reserved space |
| N2 | D01' | D02 | D003' | D004' | Reserved space |
| D000' | D001' | D0002 | D0003' | D0004' | Reserved space |
| D0000' | D00001' | D00002 | D00003' | D00004' | Reserved space |

Case 4: Data is written into a plurality of member disks (three or more) of the member disks in the RAIDS, specifically as shown in Table 7. Data X0 is written into the hard disk location D0 of the hard disk 0, and a number of times data is written is N0; data X00 is written into the hard disk location D00 of the hard disk 0, and a number of times data is written into the hard disk location D00 is N1; data X1 is written into the hard disk location D1 of the hard disk 1, and a number of times data is written into the hard disk location D1 is N2; and data X2 is written into the hard disk location D2 of the hard disk 2, and a number of times data is written into the hard disk location D2 is N3.

Table 7

| Hard Disk 0 | Hard Disk 1 | Hard Disk 2 | Hard Disk 3 | Hard Disk 4 | Hard Disks That Form the RAID5 |
|---|---|---|---|---|---|
| X0 | X1 | X2 | D3 | P0 | Striped data |
| X00 | D01 | D02 | P1 | D04 | Striped data |
| D000 | D001 | P2 | D003 | D004 | Striped data |
| D0000 | P3 | D0002 | D0003 | D0004 | Striped data |
| P4 | D00001 | D00002 | D00003 | D00004 | Striped data |
| N0 | N2 | N3 | D3' | D04' | Reserved space |
| N1 | D01' | D02 | D003' | D004' | Reserved space |
| D000' | D001' | D0002 | D0003' | D0004' | Reserved space |
| D0000' | D00001' | D00002 | D00003' | D00004' | Reserved space |

The above cases illustrate that written data may be written into any one or more hard disk locations of any one or more stripes. Therefore, written data exhibits randomness. Furthermore, since the parity bits (i.e., parity disks) corresponding to each stripe are determined by performing XOR operations on the data written into the respective stripes corresponding to the parity bits and the original parity data, write-back (correction) of the parity bits may writing back parity bits corresponding to specific stripes rather than all stripes, thereby enhancing processing flexibility.

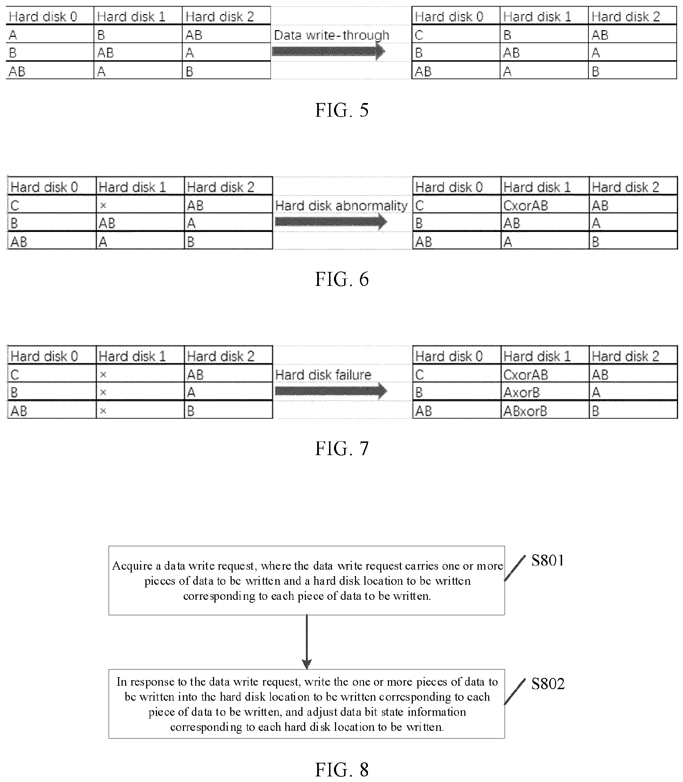

After adopting the write-through approach, the writing performance of the RAIDS is optimized. However, a risk of data inconsistency caused due to unsynchronized modification of the parity bit's parity data is introduced. For example, in a case of a hard disk failure or abnormal hard disk writing, the parity bit has not been updated with the latest parity data. Therefore, when data is restored by using a "parity check" algorithm on data of remaining member disks of the RAID5, the latest data cannot be restored completely since the parity bit does not contain the latest parity data. This includes several specific cases, which are explained in combination with FIGS. 5, 6, and 7, where the hard disk 0 and the hard disk 1 in FIGS. 5, 6, and 7 are both configured to store written data, and the parity bit corresponding to each stripe is located on the hard disk 2. Therefore, the hard disk 2 serves as a parity disk configured to store the parity data of the parity bit.

1. Data write-through without synchronously modifying the parity data. As shown in FIG. 5, the left diagram shows a data situation of each hard disk before data is written, and the right diagram shows a data situation of each hard disk after data is written. In the right diagram, data C is written into a first hard disk location of the hard disk 0, which means original data A in the first hard disk location of the hard disk 0 is modified to C.

2. As shown in FIG. 6, the left diagram shows a data situation where the first hard disk location of the hard disk 1, as shown in the right diagram of FIG. 5, is abnormal and the parity bit data has not been modified. The right diagram shows a data situation of each hard disk after the abnormality. The first hard disk location of the hard disk 1 is abnormal, indicated by ×. When parity bit data in the hard disk 2 that serves as the parity disk is not modified, and data of an abnormal point (the first hard disk location of the hard disk 1) is rewritten into the first hard disk location of the hard disk 1, the written data is C XOR AB = ABC. Since data normally written to the first hard disk location of the hard disk 0 in FIG. 5 is C, parity data of the parity bit (i.e., the first hard disk location of the hard disk 2) corresponding to a stripe where the first hard disk location of the hard disk 0 is located shall modify AB to CB. Therefore, in the right diagram of FIG. 6, normal data written into the first hard disk location of the hard disk 1 shall be C XOR CB = B.

3. As shown in FIG. 7, the left diagram shows that all hard disk locations of the hard disk 1, as shown in the right diagram of FIG. 5, are abnormal, indicated by ×. Prior to all hard disk locations of the hard disk 1 being abnormal, the data is as shown in the right diagram of FIG. 6. If data of the abnormal point is rewritten into the first hard disk location of the hard disk 1, written data should be C XOR AB = ABC. However, since parity bits corresponding to other stripes are not affected (the parity bits are not corrected), data of other stripes remains original normal data.

To address issue of data consistency and reliability caused due to unsynchronized modification of the parity bits in abnormal cases, the present application employs a flag bit to record a write operation for each hard disk location in each stripe during data writing. To ensure the data consistency and reliability, a control unit of the RAIDS (such as a RAID card controller) may adjust a data consistency check (i.e., a correction for the parity bit) based on a real-time operating state of the RAID card. That is, parity bit correction is performed based on hard disk state information (such as a number of times that the hard disk writes data triggered by a data write operation) and flag state information (such as a count of a flag bit triggered by the data write operation). In cases involving a hard disk failure, correction of a data parity bit will also be completed before the hard disk is offline to ensure data consistency and reliability.

The method for improving the RAIDS performance provided in the present application is applicable to a scenario involving data writing of RAIDS. In other embodiments, the method provided in the present application is also applicable to scenarios involving data writing of RAID6. The difference lies in that the RAID6 has an additional parity bit compared with the RAIDS. When the method provided in the present application is applied to scenarios involving the data writing of the RAID6, the additional parity bit that the RAID6 has over the RAIDS may be corrected simultaneously when the other parity bits are corrected.

The method for improving the RAIDS performance provided in the present application is applicable to a control unit. The control unit is configured in a computing device. The computing device includes, but not limited to, a server. The control unit may be a RAID card controller. The present application implements a write-through operation for the RAIDS through Firmware of the RAID card controller. After the write-through operation, the parity bit is written back (i.e., correction) based on data bit state information. The method ensures data redundancy reliability recovery.

To better understand the embodiment of the present application, the method for improving the RAIDS performance provided in the embodiment of the present application will be illustratively described below in combination with FIGS. 8 to 14.

As details shown in FIG. 8, FIG. 8 is a schematic flowchart of a method for improving write performance of the RAIDS according to an embodiment of the present application. The method for improving the RAIDS performance provided in the embodiment of the present application is applied to a control unit. The control unit is configured in the computing device. Specifically, the method in the embodiment of the present application includes following steps.

S801: Acquire a data write request, and the data write request carries one or more pieces of data to be written and a hard disk location to be written corresponding to each piece of data to be written.

In the embodiment of the present application, the computing device may acquire the data write request, and the data write request carries the one or more pieces of data to be written and the hard disk location to be written corresponding to each piece of data to be written. One hard disk includes a plurality of hard disk locations. The hard disk location to be written includes: one or more hard disk locations of a single hard disk, and/or one or more hard disk locations corresponding to each hard disk among a plurality of hard disks. The hard disk location to be written includes, but is not limited to, an identifier configured to indicate the hard disk location, and the identifier includes, but is not limited to, any one or more of characters, numbers, letters, etc.

S802: In response to the data write request, write the one or more pieces of data to be written into the hard disk location to be written corresponding to each piece of data to be written, and adjust data bit state information corresponding to each hard disk location to be written.

In the embodiment of the present application, after acquiring the data write request, the computing device may, in response to the data write request, write the one or more pieces of data to be written into the hard disk location to be written corresponding to each piece of data to be written, and adjust the data bit state information corresponding to each hard disk location to be written. The data bit state information includes hard disk state information and flag bit state information. Each piece of hard disk state information is configured to indicate that each hard disk location has been used and indicate data written into the hard disk location. The flag bit state includes a count of the flag bit, and the count of the flag bit is determined based on a number of times data is written into each hard disk location. Take Table 2 as an example. In a case that data is written into the hard disk location D0 of the hard disk 0 for N times, a count of the corresponding flag bit D0' is N.

In an embodiment, the computing device, when adjusting the data bit state information corresponding to each hard disk location to be written, may, after writing the one or more pieces of data to be written into the hard disk location to be written corresponding to each piece of data to be written, acquire a number of times data is written into each hard disk location to be written, and adjust the hard disk state information corresponding to each hard disk location to be written. The hard disk state information corresponding to each hard disk location to be written is configured to indicate that each hard disk location to be written has been used; and adjust the flag bit state information corresponding to each hard disk location to be written based on the number of times the data is written into each hard disk location to be written. The flag bit state information corresponding to each hard disk location to be written is configured to indicate a count of a flag bit corresponding to each hard disk location to be written (i.e., the number of times the data is written into each hard disk location to be written). See Tables 4, 5, 6, and 7 for details. In an example, assume that data X is written into a hard disk location to be written D0, and a number of times the data is written into the hard disk location D0 is N, hard disk state information corresponding to the hard disk location to be written D0 may be adjusted, and flag bit state information of a flag bit D0' corresponding to the hard disk location to be written D0 may be adjusted to N.

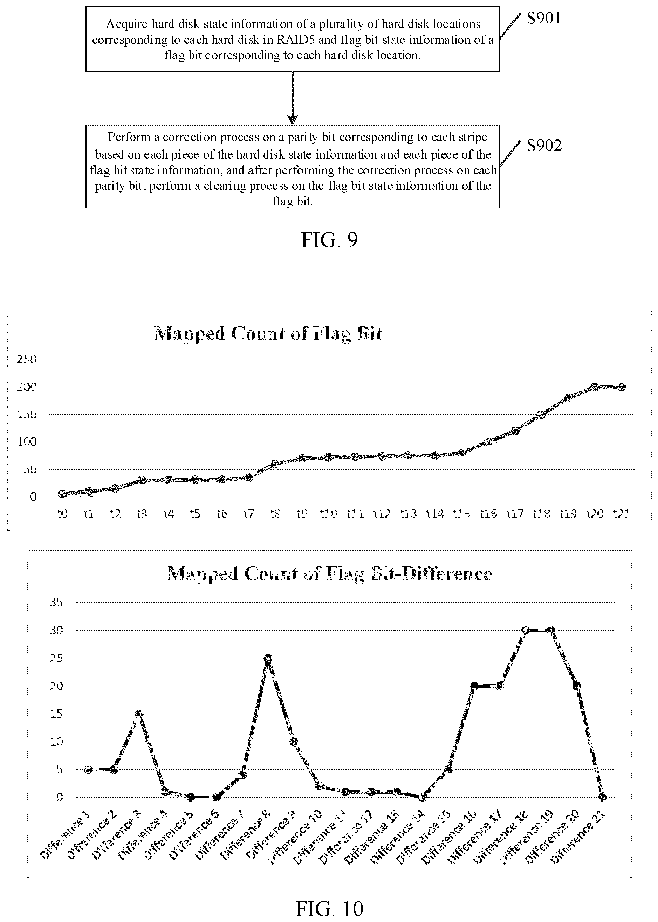

In an embodiment, after adjusting the data bit state information corresponding to the hard disk location to be written, the computing device may acquire hard disk state information of the plurality of hard disk locations corresponding to each hard disk in the RAIDS, and the flag bit state information of the flag bit corresponding to each hard disk location; based on each piece of hard disk state information and each piece of flag bit state information, perform a correction process on a parity bit corresponding to each stripe (for details, see description of an embodiment corresponding to FIG. 9). Each piece of hard disk state information is configured to indicate that each hard disk location has been used and indicate data written into the hard disk location; and after performing the correction process on the parity bit, perform a clearing process on the flag bit state information of each flag bit.

Furthermore, when the computing device acquires the hard disk state information of the plurality of hard disk locations corresponding to each hard disk in the RAIDS and the flag bit state information of the flag bit corresponding to each hard disk location, the computing device may acquire a hard disk location of one or more hard disks with data written in the RAIDS, and acquire hard disk state information of each hard disk location with data written, and flag bit state information of a flag bit corresponding to each hard disk location. For example, assume that each hard disk in the RAIDS has M hard disk locations, where N (N is less than or equal to M) hard disk locations have data written, hard disk state information of N hard disk locations with data written and flag bit state information of a flag bit corresponding to each hard disk location, may be acquired.

The embodiment of the present application optimizes and enhances the performance of the RAIDS by modifying the data write action of the RAIDS to a write-through action, and further corrects the parity bit based on the hard disk state information of the plurality of hard disk locations corresponding to each hard disk in the RAIDS and the flag bit state information of the flag bit corresponding to each hard disk location, ensuring the data consistency and reliability.

As details shown in FIG. 9, FIG. 9 is a schematic flowchart of another method for improving write performance of the RAIDS according to an embodiment of the present application. The method for improving the RAIDS performance provided in the embodiment of the present application is applied to a control unit. The control unit is configured in a computing device. Specifically, the embodiment of the present application mainly explains how to correct the parity bit, and the method includes the following steps.

S901: Acquire hard disk state information of a plurality of hard disk locations corresponding to each hard disk in the RAIDS and flag bit state information of a flag bit corresponding to each hard disk location.

S902: Perform a correction process on a parity bit corresponding to each stripe based on each piece of hard disk state information and each piece of flag bit state information, and after performing the correction process on each parity bit, perform a clearing process on the flag bit state information of the flag bit.

In the embodiment of the present application, the computing device may correct (i.e., write back or rewrite) the parity bit corresponding to each stripe based on each piece of hard disk state information and a count of each flag bit.

The computing device, when correcting each parity bit, may acquire a count of each flag bit, acquire a non-zero flag bit based on the count of each flag bit, determine a stripe where a hard disk location corresponding to the non-zero flag bit is located, and acquire data from all hard disk locations in the stripe (i.e., original data before writing and written data) and parity data of the parity bit corresponding to the stripe; calculate new parity data based on the data from all the hard disk locations in the stripe and the parity data of the parity bit corresponding to the stripe, rewrite the new parity data into the parity bit, and simultaneously perform a clearing process on the count of the flag bit.

The computing device, when calculating the new parity data based on the data from all the hard disk locations in the stripe and the parity data of the parity bit corresponding to the stripe, may first perform an exclusive-or operation on the original data before writing and the written data (i.e., the data to be written) from all hard disk locations in the stripe, and then perform an exclusive-or operation on the data obtained from the exclusive-or operation and the parity data from the parity bit corresponding to the stripe, to obtain new parity data. For example, assume that original data on the hard disk location D0 on the hard disk 0 is 0110, and data to be written is 1111. An exclusive-or operation may be performed on the original data 0110 and the data to be written 1111: 0110 XOR 1111 = 1001. Then, an exclusive-or operation may be performed on the data 1001 obtained from the XOR operation and the parity bit 0010 of the parity bit corresponding to the stripe to obtain new parity data: 0010 XOR 1001 = 1011. Then, the new parity data 1011 is written into the parity bit.

In an embodiment, when performing the correction process on the parity bit corresponding to each stripe based on each piece of hard disk state information and each piece of flag bit state information, the computing device may determine a target correction strategy for performing the correction process on the parity bit corresponding to each stripe based on each piece of hard disk state information and each piece of flag bit state information; and perform the correction process on the parity bit corresponding to each stripe based on the target correction strategy.

In an embodiment, when the computing device determines the target correction strategy for performing the correction process on the parity bit corresponding to each stripe based on each piece of hard disk state information and each piece of flag bit state information, the computing device may determine a load rate of the RAID5 based on each piece of hard disk state information, and determine a first correction strategy based on the load rate; acquire the count of each flag bit based on a first preset interval time cycle, and determine a second correction strategy based on the acquired count of each flag bit; and determine a target correction strategy for performing the correction process on the parity bit corresponding to each stripe based on the first correction strategy and the second correction strategy.

The hard disk state information may be used to determine how many resources in the RAID5 are spent on correcting the parity bit. When the computing device determines the load rate of the RAID5 based on each piece of hard disk state information, the computing device may determine a current business busy state (i.e., resource utilization rate) of the RAID5 based on a quantity of data write operations on each hard disk, and determine the business busy state as the load rate. The load rate is positively correlated to a quantity of hard disk locations where data has been written. For example, a load rate X1 may be calculated by dividing a sum $X_{sum}$ of counts of all hard disk locations with data written by a total count $X_{total}$ of all hard disk locations in the RAID5.

Record the load rate as X1. '1' represents an overall performance load capability of the RAID card, that is, a bandwidth performance capability that can be accommodated by the RAID card. Thus, 1-X1$\geq$0 (i.e., the load rate does not exceed the overall performance load capability of the RAID card). A greater X1 indicates a greater bandwidth load pressure (a bandwidth load pressure refers to a read/write bandwidth for accessing a hard disk through the RAID card), which results in a lower proportion of resources allocated to parity bit write-back, because the parity bit needs to be written back by the RAID card and the read/write operation on the hard disk needs to be completed based on computing resources from the RAID card. The RAID card is a card configured to implement a RAID5 function.

The bandwidth performance capability of the RAID card itself is generally much greater than aggregate bandwidth performance of the hard disks. For example, a maximum bandwidth that may be provided by the RAID5 created with 10 mechanical hard disks in a 12-disk system is unable to reach extreme performance of the RAID card, indicating that the RAID card has excess resources. This is because, for the original RAID5, the greater read/write pressure is, the more parity computing resources the RAID5 requires, as data writing into the hard disk needs computation on the RAID card. Therefore, X1 is less than 1. If the 12-disk system is configured with 10 Solid State Disks (Solid State Disk, SSD), overall bandwidth performance of the SSD hard disks may approach to or equal the bandwidth performance capability of the RAID card itself, then X1 is close to or equal to 1.

The computing device, when determining the first correction strategy based on the load rate, in a case that the load rate is less than or equal to a preset load threshold, may determine a resource invoking rate in the RAID5 based on the load rate; and based on the resource invoking rate, determine that the first correction strategy is to select an idle resource corresponding to the resource invoking rate from the RAID5 to perform the correction process on the parity bit corresponding to each stripe. The resource invoking rate is configured to indicate the idle available resource in the RAID5.

For example, assume that the preset load threshold is 95%, and the load rate is X1. If X1 is less than or equal to 95%, the computing device may determine the resource invoking rate in the RAID5 as 1-X1 based on the load rate X1, and perform the correction process on the parity bit corresponding to each stripe by using the idle resource with the resource invoking rate of 1-X1.

The computing device, when determining the first correction strategy based on the load rate, in a case that the load rate is greater than a preset load threshold, may determine that the first correction strategy is to perform the correction process on the parity bit corresponding to each stripe while writing the data to be written into each hard disk location.

For example, assume that the preset load threshold is 95%, and the load rate is X1. If X1 is greater than 95%, the computing device may perform the correction process on the parity bit corresponding to each stripe while writing the data to be written into each hard disk location.

Optionally, in a case that the load rate is greater than the preset load threshold, the computing device may determine that the first correction strategy is to perform the correction process on the parity bit corresponding to each stripe by using a reserved fixed resource in the RAID5. The fixed resource may be predefined, such as a fixed resource of 10%. Furthermore, in the case that the load rate is greater than the preset load threshold, if it is detected that there are no resources in the RAID5 to perform the correction process on the parity bit, the computing device may determine that the first correction strategy is to forcibly use an original correction strategy in the RAID5 within a preset time to perform the correction process on the parity bit corresponding to each stripe. The original correction strategy is to correct a parity bit corresponding to a stripe where the hard disk location is located while writing data into the hard disk position of the hard disk.

Optionally, in a case that the load rate is greater than the preset load threshold, the computing device may determine that the first correction strategy is to start performing the correction process on the parity bit corresponding to each stripe when waiting until the load rate is less than or equal to the preset load threshold, that is, not to perform the correction process on the parity bit corresponding to each stripe until the load rate is less than or equal to the preset load threshold. The preset time may be any customized time period such as 24 hours, 72 hours, etc., which is not specifically limited here.

The computing device, when acquiring the count of each flag bit based on the first preset interval time cycle, may continuously monitor the count of each flag bit at a first preset interval time cycle t. As time continues from t0 to t1, t2 ... tn, by tracking the running time, change information of the count of each flag bit is determined and recorded as X2. A correction process is performed on the parity bit corresponding to each stripe based on count change information of each t time period.

The first preset interval time cycle t may be 1s, 2s, or 1min, etc., or a shorter time period, such as 10 ms, which is not limited. However, a duration of t affects a number of times data is written counted each time. Taking a common mechanical hard disk and an SSD hard disk for example, the mechanical hard disk generally counts a number of times data is written every 20~40ms, while the SSD hard disk counts the number of times data is written every 2~10ms. Therefore, when t=1s, a quantity of write operations accumulated and counted within the cycle is quite large. Within each first preset interval time cycle t, a count of a flag bit corresponding to each stripe and a difference value of flag bits between two t time periods. Specifically, an example of data for a stripe is illustrated in FIG. 10. FIG. 10 includes a plurality of sub-figures illustrating the example of data for the stripe. Since actual data writing scenarios are random and irregular, the only rule before the count of the flag bit is cleared is a continuous cumulative increase. However, increase of the count of the flag bit during each time period t is irregular.

In an embodiment, when determining the second correction strategy based on the acquired count of each flag bit, the computing device may determine count change information of each flag bit based on the acquired count of each flag bit; and determine the second correction strategy based on the count change information of each flag bit. When the count of each flag bit is acquired, the count of each flag bit that is not 0 may be acquired.

In an implementation, the computing device, when determining the second correction strategy based on the count change information of each flag bit, in a case of determining one or more stripes with real-time written data based on the count change information of each flag bit, may determine that the second correction strategy is to perform the correction process on the parity bit corresponding to each stripe by using the original correction strategy in the RAIDS within a preset time. The preset time is 24h, 48h, or 72h, which is not specifically limited here. The original correction strategy is to correct the parity bit corresponding to the stripe in which the hard disk location is located while writing the data to the hard disk location, to ensure redundancy reliability of the data.

In an embodiment, the computing device, when determining the second correction strategy based on the count change information of each flag bit, in a case of determining that each stripe is non-continuously written data (i.e., intermittently written data) based on the count change information of each flag bit, determine that the second correction strategy is to perform the correction process on the parity bit corresponding to each stripe based on a second preset interval time cycle. The second preset interval time cycle may be determined and obtained based on the first preset interval time cycle, and the second preset interval time cycle may be equal to the first preset interval time cycle, or the second preset interval time cycle may be a multiple of the first preset interval time cycle. For example, a second preset interval time cycle T may be equal to a second preset interval time cycle t, or a multiple of the second preset interval time cycle t.

In a case where data is continuously written but not in a real-time manner, the second preset interval time cycle is related to the first preset interval time cycle t, that is, the parity bit is written back within a multiple of time period t. By adjusting a frequency (i.e., a cycle) of the parity bit correction, an impact of resource consumption on a real-time business load is avoided.

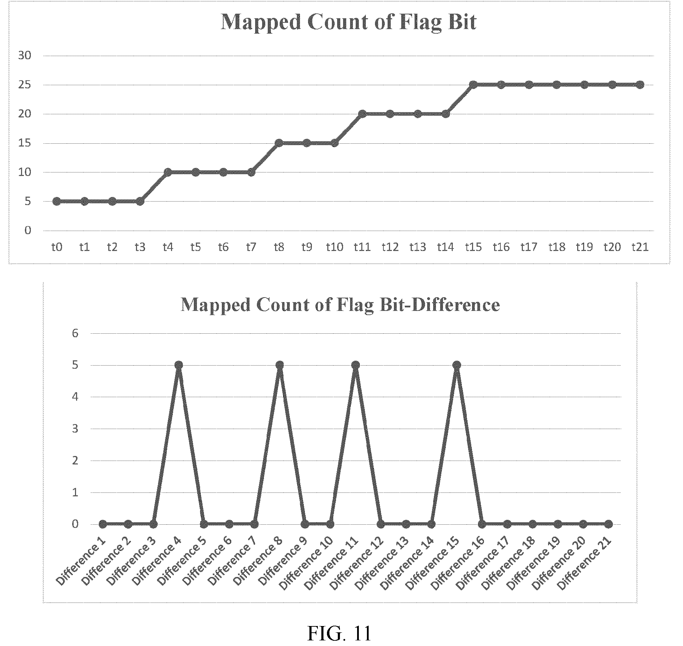

Taking FIG. 11 as an example, FIG. 11 illustrates a count of a flag bit in each time cycle (i.e., the first preset interval time cycle) in a case of non-continuously writing data. A case where 100 ms is used as the first preset interval cycle is as shown in FIG. 11. There is no continuous increase in the count (difference values are zero) of write operations within time periods of 100ms, 200ms, 300ms, and 500ms, and there are write operations at time t0, t4, t8, t11, and t15.

The present application determines a written-back parity bit Y based on a flag state X2 of the flag bit and a current load rate X1 of the RAID card. X1 determines how many resources are spent on the write-back action of the parity bit based on the load rate of the RAID card, respectively 1-X1, that is, an idle resource of the RAID card is used for a write-back operation of the parity bit. As for data of which stripes is operated, a write-back operation on parity bits corresponding to which stripes needs to be determined based on a state of X2, ensuring data reliability and consistency.

In an embodiment, when the computing device determines the second correction strategy based on the count change information of each flag bit, in a case of determining that a count each stripe writes data within a preset time range based on the count change information of each flag bit is less than a preset count threshold (i.e., a situation where data reading is dominant with occasional data writing), the computing device may determine that the second correction strategy is to perform the correction process on the parity bit corresponding to each hard disk location of each stripe while reading data.

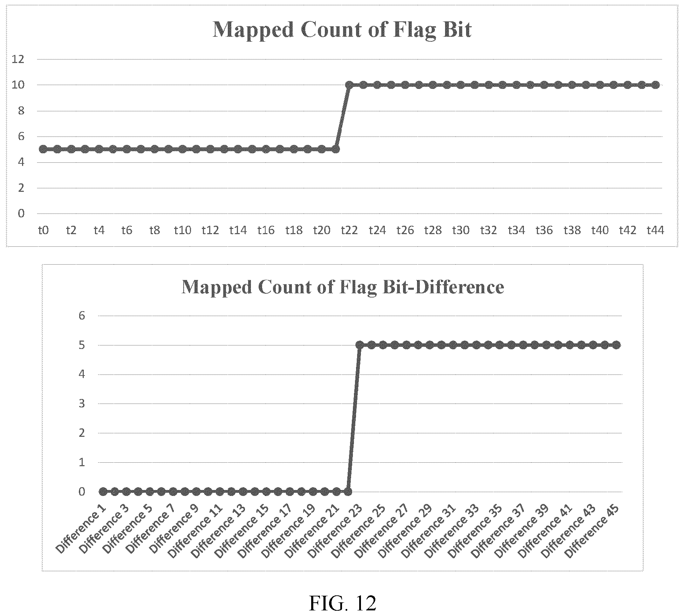

As shown in FIG. 12, FIG. 12 illustrates a count of a flag bit for each time cycle (i.e., the first preset interval time cycle) when data reading is dominant with occasional data writing. Using 100 ms as a first preset interval time cycle, 22 cycles are accumulated. That is, there is no write operation within 2.2s, and after an interval of 2.2s, a count of write operations is increased by 5, and then remains unchanged for another 2.2s.

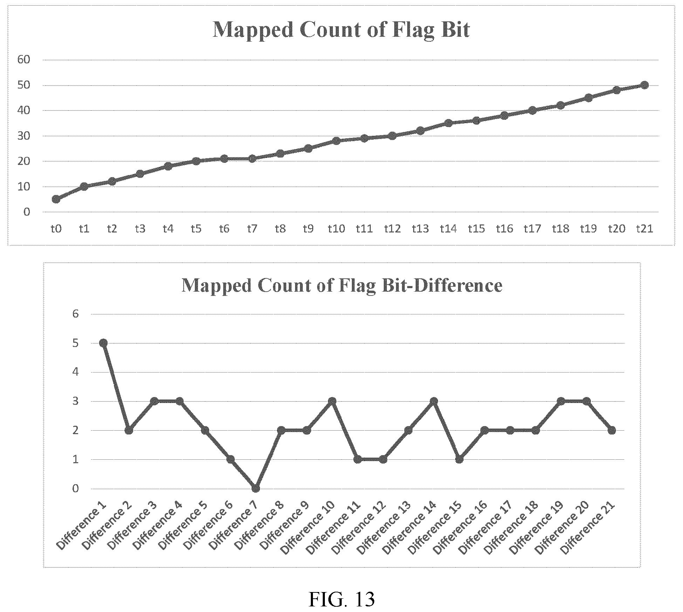

As shown in FIG. 13, FIG. 13 illustrates the count of the flag bit for each time cycle (i.e., the first preset interval time cycle) when data is continuously written. As shown in FIG. 13, there is a continuous write operation at each moment. It can be seen from FIG. 13 that a count of data write operations is continuously increasing, and is zero only occasionally based on a difference value.

In an embodiment, in a case where the computing device determines that the hard disk is faulty, the computing device may acquire the flag bit state information corresponding to each hard disk location in each stripe, and perform the correction process on a parity bit corresponding to a stripe where the flag bit state information is not 0.

In an embodiment, when the computing device determine a target correction strategy for performing the correction process on the parity bit corresponding to each stripe based on the first correction strategy and the second correction strategy, the computing device may perform a combination process of the first correction strategy and the second correction strategy, and determine the combined correction strategy as the target correction strategy.

In a case where there is no obvious rule, the computing device may perform the combination process of the first correction strategy and the second correction strategy, and determine the combined correction strategy as the target correction strategy. In the combination process of the first correction strategy and the second correction strategy, any one of a plurality of methods in the first correction strategy may be combined with any one of a plurality of methods in the second correction strategy in pairs to obtain the target correction strategy.

For example, assume that the first correction strategy is to perform the correction process on the parity bit corresponding to each stripe where the hard disk location to be written is located while writing each piece of data to be written into the corresponding hard disk location to be written, and the second correction strategy is to perform the correction process on the parity bit corresponding to each stripe with non-continuously written data based on the second preset interval time cycle. Then the first correction strategy and the second correction strategy may be combined, and a resulting target correction strategy is to perform the correction process on the parity bit corresponding to each stripe where the hard disk location to be written with the non-continuously written data is located while writing each piece of data to be written into a corresponding hard disk location to be written.

In a case of determining that a write abnormality occurs in a hard disk, the computing device triggers a remapping of the hard disk and stores remapped flag bit data to a flag bit corresponding to the hard disk. The remapping of the hard disk refers to recalculating data of all hard disk locations where the writing abnormality occurs and a count of the flag bit corresponding to each of the hard disk locations where the writing abnormality occurs, then writing recalculated new written data to the hard disk locations where the writing abnormality occurs, and writing a new count of the flag bit to a flag bit corresponding to each of the hard disk locations where the writing abnormality occurs.

The present application optimizes and enhances the performance of the RAIDS by modifying the data write action of the RAIDS to the write-through action, and further dynamically corrects the parity bit based on the data bit state information of the RAIDS and resources of the RAIDS itself, ensuring the data consistency and reliability.

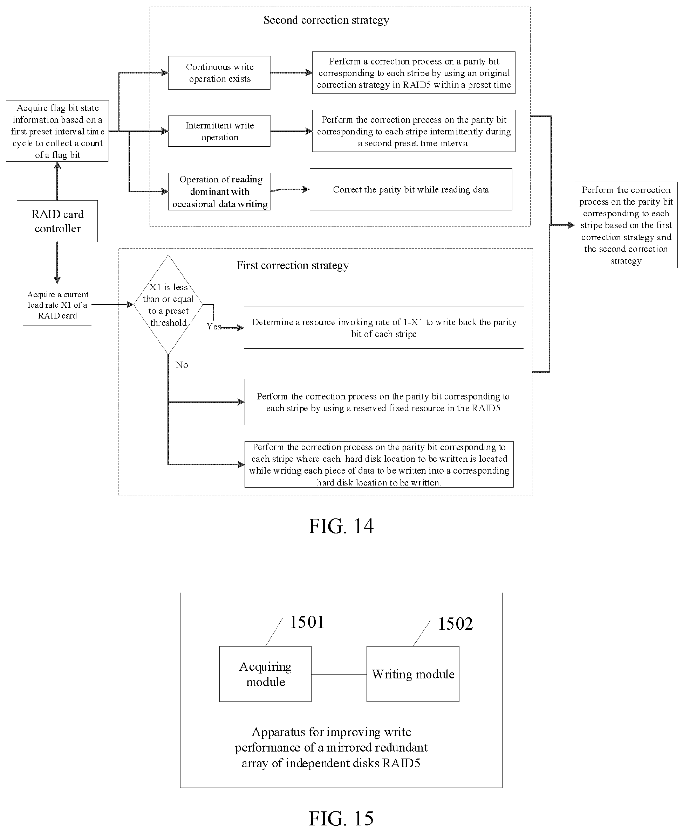

As shown in FIG. 14, FIG. 14 is a schematic flowchart of another method for improving write performance of the RAIDS according to an embodiment of the present application. The method for improving the RAIDS performance provided in the embodiment of the present application is applied to a control unit. The control unit is configured in a computing device, and may be a RAID card controller.

Specifically, the RAID card controller may acquire current state information of the RAID card, and the state information of the RAID card is determined based on hard disk state information of each hard disk in the RAIDS, and acquire flag bit state information based on a first preset interval time cycle to collect a count of the flag bit.

Optionally, the RAID controller may correct each parity bit based on the state information, and the state information is a load rate $X1$. If $X1$ is less than or equal to a preset load threshold (for example, 95%), the RAID card controller determines a resource invoking rate of $1-X1$ based on the $X1$, and writes back (i.e., correct) the parity bit of each stripe. If $X1$ is greater than the preset load threshold, the RAID card controller may perform the correction process on the parity bit corresponding to each stripe where each hard disk location to be written is located while writing each piece of data to be written into a corresponding hard disk location to be written, or perform the correction process on the parity bit corresponding to each stripe by using a reserved fixed resource in the RAIDS.

Optionally, the RAID card controller may correct each parity bit based on the collected count of the flag bit. When a continuous write operation in the data write operation within the first preset interval time cycle is determined based on the collected count of the flag bit, the RAID card controller may perform the correction process on the parity bit corresponding to each stripe by using an original correction strategy in the RAIDS within the preset time.

When an intermittent write operation in a data write operation within the first preset interval time cycle is determined based on the collected count of the flag bit, the RAID card controller may perform the correction process on the parity bit corresponding to each stripe intermittently during the second preset time interval. The second preset interval time cycle may be determined and obtained based on the first preset interval time cycle, and the second preset interval time cycle may be equal to the first preset interval time cycle, or the second preset interval time cycle may be a multiple of the first preset interval time cycle. For example, the second preset interval time cycle T may be equal to the second preset interval time cycle t, or a multiple of the second preset interval time cycle t.

When the data write operation is determined based on the collected count of the flag bit to be an operation of predominantly reading with occasional writing during the first preset interval time cycle, the RAID card controller may correct the parity bit while reading the data.

Optionally, the RAID card controller may further correct each parity bit based on current hard disk state information of each hard disk and the count of the flag bit. When each parity bit is corrected based on the current state information of the RAID card and the count of the flag bit, one or more first correction strategies for correcting each parity bit based on the current hard disk state information of each hard disk may be acquired, and the one or more second correction strategies for correcting each parity bit may be acquired based on the count of the flag bit. Furthermore, each first correction strategy and each second correction strategy may be combined in pairs to correct each parity bit. Furthermore, by combining each first correction strategy and each second correction strategy in pairs, a combined correction strategy is determined as the target correction strategy. In a process of combining the first correction strategy and the second correction strategy, any one of a plurality of methods in the first correction strategy may be combined with any one of a plurality of methods in the second correction strategy in pairs to obtain the target correction strategy.

For example, assume that the first correction strategy is to perform the correction process on the parity bit corresponding to each stripe where the hard disk location to be written is located while writing each piece of data to be written into a corresponding hard disk location to be written, and the second correction strategy is to perform the correction process on the parity bit corresponding to each stripe based on the second preset interval time cycle. Then the first correction strategy and the second correction strategy may be combined, and a resulting target correction strategy is to, based on the second preset interval time cycle, perform the correction process on the parity bit corresponding to each stripe where the hard disk location to be written is located while writing each piece of data to be written into the corresponding hard disk location to be written.

The present application improves flexibility of data processing while ensuring data reliability by correcting each parity bit by using different correction strategies under various circumstances.

As shown in FIG. 15, FIG. 15 is a structural diagram of an apparatus for improving write performance of a mirrored redundant array of independent disks configuration that uses disk striping with parity RAID5 according to an embodiment of the present application. Specifically, the apparatus includes an acquiring module 1501 and a writing module 1502.

The acquiring module 1501 is configured to acquire a data write request, where the data write request carries one or more pieces of data to be written and a hard disk location to be written corresponding to each piece of data to be written.

The writing module 1502 is configured to, in response to the data write request, write the one or more pieces of data to be written into the hard disk location to be written corresponding to each piece of data to be written, and adjust data bit state information corresponding to each hard disk location to be written.

Furthermore, the data bit state information includes hard disk state information and flag bit state information; and when the writing module 1502 adjusts the data bit state information corresponding to each hard disk location to be written, the writing module 1502 is specifically configured to:

after writing the one or more pieces of data to be written into the hard disk location to be written corresponding to each piece of data to be written, acquire a number of times data is written into each hard disk location to be written, and adjust the hard disk state information corresponding to each hard disk location to be written, where the hard disk state information corresponding to each hard disk location to be written is configured to indicate that each hard disk location to be written has been used; and

adjust the hard disk state information to be written and the flag bit state information corresponding to each hard disk location based on the number of times data is written into each hard disk location to be written, where the flag bit state information corresponding to each hard disk location to be written is configured to indicate a count of the flag bit corresponding to each hard disk location to be written.

Furthermore, the data bit state information includes the hard disk state information and the flag bit state information; and after the writing module 1502 adjusts the data bit state information corresponding to the hard disk location to be written, the writing module 1502 is further configured to:

acquire hard disk state information of a plurality of hard disk locations corresponding to each hard disk in the RAID5 and flag bit state information of a flag bit corresponding to each hard disk location; and

perform a correction process on a parity bit corresponding to each stripe based on each piece of hard disk state information and each piece of flag bit state information, where each piece of hard disk state information is configured to indicate that each hard disk location has been used and indicate data written into the hard disk location; and after performing the correction process on the parity bit, perform a clearing process on the flag bit state information of the flag bit.

Furthermore, when the writing module 1502 performs the correction process on the parity bit corresponding to each stripe based on each piece of hard disk state information and each piece of flag bit state information, the writing module 1502 is specifically configured to:

determine a target correction strategy for performing the correction process on the parity bit corresponding to each stripe based on each piece of hard disk state information and each piece of flag bit state information; and perform the correction process on the parity bit corresponding to each stripe based on the target correction strategy.

Furthermore, when the writing module 1502 determines the target correction strategy for performing the correction process on the parity bit corresponding to each stripe based on each piece of hard disk state information and each piece of flag bit state information, the writing module 1502 is specifically configured to:

determine a load rate of the RAIDS based on each piece of hard disk state information, and determine a first correction strategy based on the load rate; acquire a count of each flag bit based on a first preset interval time cycle, and determine a second correction strategy based on the acquired count of each flag bit; and determine the target correction strategy for performing the correction process on the parity bit corresponding to each stripe based on the first correction strategy and the second correction strategy.

Furthermore, when the writing module 1502 determines the first correction strategy based on the load rate, the writing module 1502 is specifically configured to:

in a case that the load rate is less than or equal to a preset load threshold, determine a resource invoking rate in the RAIDS based on the load rate; and based on the resource invoking rate, determine that the first correction strategy is to select an idle resource corresponding to the resource invoking rate from the RAIDS to perform the correction process on the parity bit corresponding to each stripe.

Furthermore, when the writing module 1502 determines the first correction strategy based on the load rate, the writing module 1502 is specifically configured to:
in a case that the load rate is greater than a preset load threshold, determine that the first correction strategy is to perform the correction process on the parity bit corresponding to each stripe where each hard disk location to be written is located while writing each piece of data to be written into each corresponding hard disk location to be written; or determine that the first correction strategy is to perform the correction process on the parity bit corresponding to each stripe by using a reserved fixed resource in the RAIDS.
Furthermore, when the writing module 1502 determines the second correction strategy based on the acquired count of each flag bit, the writing module 1502 is specifically configured to:

determine count change information of each flag bit based on the acquired count of each flag bit; and determine the second correction strategy based on the count change information of each flag bit.

Furthermore, when the writing module 1502 determines the second correction strategy based on the count change information of each flag bit, the writing module 1502 is specifically configured to:
in a case of determining one or more stripes with real-time written data based on the count change information of each flag bit, determine that the second correction strategy is to perform the correction process on the parity bit corresponding to each stripe by using an original correction strategy in the RAIDS within a preset time, where the original correction strategy is to perform the correction process on the parity bit while writing data.
Furthermore, when the writing module 1502 determines the second correction strategy based on the count change information of each flag bit, the writing module 1502 is specifically configured to:
in a case of determining one or more stripes with non-continuously written data based on the count change information of each flag bit, determine that the second correction strategy is to perform the correction process on the parity bit corresponding to each stripe with the non-continuously written data based on a second preset interval time cycle.
Furthermore, when the writing module 1502 determines the second correction strategy based on the count change information of each flag bit, the writing module 1502 is specifically configured to:

in a case of determining, based on the count change information of each flag bit, that a count of data written to each stripe within a preset time range is less than a preset count threshold, determine that the second correction strategy is to perform the correction process on the parity bit corresponding to each stripe while reading data.

Furthermore, the writing module 1502 is further configured to:

in a case of determining that a hard disk is faulty, acquire the flag bit state information corresponding to each hard disk location in each stripe, and perform the correction process on a parity bit corresponding to a stripe where the flag bit state information is not 0.

Furthermore, the writing module 1502 is further configured to:

in a case of determining that a write abnormality occurs in a hard disk, trigger a remapping of the hard disk and store remapped flag bit data to a flag bit corresponding to the hard disk.

Furthermore, the writing module 1502 is further configured to:

when correcting each parity bit, acquire a count of each flag bit, and acquire a non-zero flag bit based on the count of each flag bit;

acquire data of all hard disk locations in a stripe where a hard disk location corresponding to the non-zero flag bit is located and parity data of the parity bit corresponding to the stripe; and

calculate new parity data based on the data of all the hard disk locations in the stripe and the parity data of the parity bit corresponding to the stripe, rewrite the new parity data into the parity bit, and simultaneously perform a clearing process on the count of the flag bit.

The present application optimizes and enhances the performance of the RAIDS by modifying the data write action of the RAIDS to the write-through action, and dynamically corrects the parity bit based on the data bit state information of the RAIDS and resources of the RAIDS itself, ensuring the data consistency and reliability.

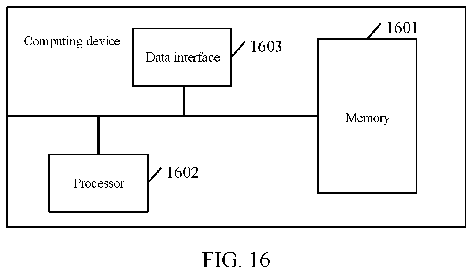

As shown in FIG. 16, FIG. 16 is a structural diagram of a computing device according to an embodiment of the present application. Specifically, a computer device includes: a memory 1601 and a processor 1602.

In an embodiment, the computer device further includes a data interface 1603. The data interface 1603 is configured to transmit data information between the computer device and other devices.

The memory 1601 may include a volatile memory (volatile memory); the memory 1601 may further include a non-volatile memory (non-volatile memory); and the memory 1601 may further include a combination of the above types of memories. The processor 1602 may be a central processing unit (central processing unit, CPU). The processor 1602 may further include a hardware chip. The above hardware chip may be an application-specific integrated circuit (application-specific integrated circuit, ASIC), a programmable logic device (programmable logic device, PLD), or any combination thereof. The above PLD may be a complex programmable logic device (complex programmable logic device, CPLD), a field-programmable gate array (field-programmable gate array, FPGA), or any combination thereof.

The memory 1601 is configured to store a program. The processor 1602 may invoke a program stored in the memory 1601 to perform following steps:

acquiring a data write request, where the data write request carries one or more pieces of data to be written and a hard disk location to be written corresponding to each piece of data to be written; and

in response to the data write request, writing the one or more pieces of data to be written into the hard disk location to be written corresponding to each piece of data to be written, and adjust data bit state information corresponding to each hard disk location to be written.

Furthermore, the data bit state information includes hard disk state information and flag bit state information; when the processor 1602 adjusts the data bit state information corresponding to each hard disk location to be written, the processor 1602 is specifically configured to:

after writing the one or more pieces of data to be written into the hard disk location to be written corresponding to each piece of data to be written, acquire a number of times data is written into each hard disk location to be written, and adjust the hard disk state information corresponding to each hard disk location to be written, where the hard disk state information corresponding to each hard disk location to be written is configured to indicate that each hard disk location to be written has been used; and

adjust the flag bit state information based on the number of times the data is written into each hard disk location to be written, where the flag bit state information corresponding to each hard disk location to be written is configured to indicate the number of times the data is written into each hard disk location to be written.

Furthermore, the data bit state information includes the hard disk state information and the flag bit state information; and after the processor 1602 adjusts the data bit state information corresponding to the hard disk location to be written, the processor 1602 is further configured to:

acquire hard disk state information of a plurality of hard disk locations corresponding to each hard disk in the RAIDS and flag bit state information of a flag bit corresponding to each hard disk location; and

perform a correction process on a parity bit corresponding to each stripe based on each piece of hard disk state information and each piece of flag bit state information, where each piece of hard disk state information is configured to indicate that each hard disk location has been used and indicate data written into the hard disk location; and after performing the correction process on the parity bit, perform a clearing process on the flag bit state information of the flag bit.

Furthermore, when the processor 1602 performs the correction process on the parity bit corresponding to each stripe based on each piece of hard disk state information and each piece of flag bit state information, the processor 1602 is specifically configured to:

determine a target correction strategy for performing the correction process on the parity bit corresponding to each stripe based on each piece of hard disk state information and each piece of flag bit state information; and

perform the correction process on the parity bit corresponding to each stripe based on the target correction strategy.

Furthermore, when the processor 1602 determines the target correction strategy for performing the correction process on the parity bit corresponding to each stripe based on each piece of hard disk state information and each piece of flag bit state information, the processor 1602 is specifically configured to:

determine a load rate of the RAIDS based on each piece of hard disk state information, and determine a first correction strategy based on the load rate;

acquire a count of each flag bit based on a first preset interval time cycle, and determine a second correction strategy based on the acquired count of each flag bit; and

determine the target correction strategy for performing the correction process on the parity bit corresponding to each stripe based on the first correction strategy and the second correction strategy.

Furthermore, when the processor 1602 determines the first correction strategy based on the load rate, the processor 1602 is specifically configured to:

in a case that the load rate is less than or equal to a preset load threshold, determine a resource invoking rate in the RAIDS based on the load rate; and

based on the resource invoking rate, determine that the first correction strategy is to select an idle resource corresponding to the resource invoking rate from the RAIDS to perform the correction process on the parity bit corresponding to each stripe.

Furthermore, when the processor 1602 determines the first correction strategy based on the load rate, the processor 1602 is specifically configured to:

in a case that the load rate is greater than the preset load threshold, determine that the first correction strategy is to perform the correction process on the parity bit corresponding to each stripe where each hard disk location to be written is located while writing each piece of data to be written into each corresponding hard disk location to be written; or determine that the first correction strategy is to perform the correction process on the parity bit corresponding to each stripe by using a reserved fixed resource in the RAIDS.

Furthermore, when the processor 1602 determines the second correction strategy based on the acquired count of each flag bit, the processor 1602 is specifically configured to:

determine count change information of each flag bit based on the acquired count of each flag bit; and

determine the second correction strategy based on the count change information of each flag bit.

Furthermore, when the processor 1602 determines the second correction strategy based on the count change information of each flag bit, the processor 1602 is specifically configured to:

in a case of determining one or more stripes with real-time written data based on the count change information of each flag bit, determine that the second correction strategy is to perform the correction process on a parity bit corresponding to each stripe by using an original correction strategy in the RAIDS within a preset time, where the original correction strategy is to perform the correction process on the parity bit while writing data.

Furthermore, when the processor 1602 determines the second correction strategy based on the count change information of each flag bit, the processor 1602 is specifically configured to:
in a case of determining one or more stripes with non-continuously written data based on the count change information of each flag bit, determine that the second correction strategy is to perform the correction process on the parity bit corresponding to each stripe with the non-continuously written data based on a second preset interval time cycle.

Furthermore, when the processor 1602 determines the second correction strategy based on the count change information of each flag bit, the processor 1602 is specifically configured to:
in a case of determining, based on the count change information of each flag bit, that a count of data written to each stripe within a preset time range is less than a preset count threshold, determine that the second correction strategy is to perform the correction process on the parity bit corresponding to each stripe while reading data.

Furthermore, the processor 1602 is further configured to:
in a case of determining that a hard disk is faulty, acquire the flag bit state information corresponding to each hard disk location in each stripe, and perform the correction process on a parity bit corresponding to a stripe where the flag bit state information is not 0.

Furthermore, the processor 1602 is further configured to:
in a case of determining that a write abnormality occurs in a hard disk, trigger a remapping of the hard disk and store remapped flag bit data to a flag bit corresponding to the hard disk.

Furthermore, the processor 1602 is further configured to:

when correcting each parity bit, acquire a count of each flag bit, and acquire a non-zero flag bit based on the count of each flag bit;
acquire data of all hard disk locations in a stripe where a hard disk location corresponding to the non-zero flag bit is located and parity data of the parity bit corresponding to the stripe; and
calculate new parity data based on the data of all the hard disk locations in the stripe and the parity data of the parity bit corresponding to the stripe, rewrite the new parity data into the parity bit, and simultaneously perform a clearing process on the count of the flag bit.

The present application optimizes and enhances the performance of the RAIDS by modifying the data write action of the RAIDS to the write-through action, and dynamically corrects the parity bit based on the data bit state information of the RAIDS and resources of the RAIDS itself, ensuring the data consistency and reliability.

Those skilled in the art may also understand that various illustrative logical blocks (illustrative logical block) and steps (step) listed in the embodiments of the present application may be implemented by using electronic hardware, computer software, or a combination thereof. Whether the functions are implemented by using hardware or software depends on particular applications and a design requirement of an entire system. Those skilled in the art may use various methods to implement the functions for each particular application, but it should not be considered that the implementation goes beyond the protection scope of the present application.

The present application further provides a computer-readable storage medium storing a computer program, where the computer program includes a program instruction, and the program instruction, when executed by a computer, implements a function of any one of the method embodiments described above.

The computer-readable storage medium includes but is not limited to a flash memory, a hard disk, and a solid-state drive.

The present application further provides a computer program product, and the computer program product, when executed by a computer, implements a function of any one of the method embodiments described above.

The solution described in the present application may be implemented in various manners. For example, the technologies may be implemented by hardware, software, or a combination thereof. For hardware implementation, a processing unit configured to execute the technologies related to the above methods may be implemented in one or more general-purpose processors, digital signal processors (digital signal processor, DSP), digital signal processor components, or application-specific integrated circuits (application-specific integrated circuit, ASIC), programmable logic devices, field programmable gate arrays (field programmable gate array, FPGA), or other programmable logic apparatus, discrete gate or transistor logic, discrete hardware component, or any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors in combination with a digital signal processor core, or any other similar configuration.

Some or all of the above embodiments may be implemented by software, hardware, firmware, or any combination thereof. When implemented by software, some or all of the embodiments may be implemented in a form of a computer program product. The computer program product includes one or more computer instructions. When the computer instruction is loaded and executed on a computer, some or all of procedures or functions according to the embodiments of the present application are generated. The computer instruction may be stored in a computer-readable storage medium or may be transmitted from a computer-readable storage medium to another computer-readable storage medium.

In the present application, unless otherwise specified, an element represented in a singular form is intended to represent "one or more", but is not intended to represent "one and only one". In the present application, unless otherwise specified, "a plurality of" is intended to represent "two or more".

In addition, the term "and/or" in this specification describes only an association relationship between associated objects and represents that three relationships may exist. For example, A and/or B may represent the following three cases: only A exists, both A and B exist, and only B exists, where A and B may be singular or plural.

Designated in the present application (such as a designated time threshold range) may be understood as defined, predefined, stored, prestored, prenegotiated, preconfigured, solidified, or pre-burned.

Those skilled in the art may understand that, for convenient and brief descriptions, a specific working process of the above server and unit may refer to a corresponding process in the above method embodiments, which will not be repeated here.

Same or similar parts in the embodiments of the present application may be referred to each other. In the embodiments of the present application and the implementations/implementation methods/realization methods in the embodiments, unless otherwise specified or a logical conflict occurs, terms and/or descriptions among different embodiments and among the implementations/implementation methods/realization methods in the embodiments are consistent and may be mutually referenced. Technical features in the different embodiments and the implementations/implementation methods/realization methods in the embodiments may be combined according to an internal logical relationship thereof to form a new embodiment, implementation, implementation method, or realization method. The implementations of the present application described above does not construe a limitation of the protection scope of the present application.

## Claims

1. A method for improving write performance of a mirrored redundant array of independent disks configuration that uses disk striping with parity RAIDS, comprising:

   acquiring a data write request, wherein the data write request carries one or more pieces of data to be written and a hard disk location to be written corresponding to each piece of data to be written; and
   in response to the data write request, writing the one or more pieces of data to be written into the hard disk location to be written corresponding to the each piece of data to be written, and adjusting data bit state information corresponding to each hard disk location to be written.

2. The method according to claim 1, wherein the data bit state information comprises hard disk state information and flag bit state information; and wherein adjusting the data bit state information corresponding to each hard disk location to be written, comprises:

   after writing the one or more pieces of data to be written into the hard disk location to be written corresponding to each piece of data to be written, acquiring a number of times data is written into each hard disk location to be written, and adjusting the hard disk state information corresponding to the each hard disk location to be written, wherein the hard disk state information corresponding to the each hard disk location to be written is configured to indicate that each hard disk location to be written has been used; and
   adjusting the flag bit state information corresponding to each hard disk location to be written based on the number of times the data is written into the each hard disk location to be written, wherein the flag bit state information corresponding to the each hard disk location to be written is configured to indicate the number of times the data is written into the each hard disk location to be written.

3. The method according to claim 1, wherein the data bit state information comprises hard disk state information and flag bit state information; and wherein after adjusting the data bit state information corresponding to the hard disk location to be written, the method further comprises:

   acquiring hard disk state information of a plurality of hard disk locations corresponding to each hard disk in the RAIDS and flag bit state information of a flag bit corresponding to each hard disk location; and
   performing a correction process on a parity bit corresponding to each stripe based on each piece of hard disk state information and each piece of flag bit state information, wherein the each piece of hard disk state information is configured to indicate that each hard disk location has been used and indicate data written into the hard disk location, and after performing the correction process on the parity bit, performing a clearing process on the flag bit state information of the flag bit.

4. The method according to claim 3, wherein performing the correction process on the parity bit corresponding to each stripe based on each piece of hard disk state information and each piece of flag bit state information, comprises:

determining a target correction strategy for performing the correction process on the parity bit corresponding to each stripe based on each piece of hard disk state information and each piece of flag bit state information; and performing the correction process on the parity bit corresponding to each stripe based on the target correction strategy.

5. The method according to claim 4, wherein determining the target correction strategy for performing the correction process on the parity bit corresponding to each stripe based on each piece of hard disk state information and each piece of flag bit state information, comprises:

determining a load rate of the RAIDS based on each piece of hard disk state information, and determining a first correction strategy based on the load rate; acquiring a count of each flag bit based on a first preset interval time cycle, and determining a second correction strategy based on the acquired count of each flag bit; and determining the target correction strategy for performing the correction process on the parity bit corresponding to each stripe based on the first correction strategy and the second correction strategy.

6. The method according to claim 5, wherein determining the first correction strategy based on the load rate, comprises:

in a case that the load rate is less than or equal to a preset load threshold, determining a resource invoking rate in the RAIDS based on the load rate; and based on the resource invoking rate, determining that the first correction strategy is to select an idle resource corresponding to the resource invoking rate from the RAIDS to perform the correction process on the parity bit corresponding to the each stripe.

7. The method according to claim 5, wherein determining the first correction strategy based on the load rate, comprises: in a case that the load rate is greater than a preset load threshold, determining that the first correction strategy is to perform the correction process on the parity bit corresponding to a stripe where each hard disk location to be written is located while writing each piece of data to be written into each corresponding hard disk location to be written; or determining that the first correction strategy is to perform the correction process on the parity bit corresponding to each stripe where each hard disk location to be written is located by using a reserved fixed resource in the RAIDS.

8. The method according to claim 5, wherein determining the second correction strategy based on the acquired count of each flag bit, comprises:

determining count change information of each flag bit based on the acquired count of each flag bit; and determining the second correction strategy based on the count change information of each flag bit.

9. The method according to claim 8, wherein determining the second correction strategy based on the count change information of each flag bit, comprises: in a case of determining one or more stripes with continuously written data based on the count change information of each flag bit, determining that the second correction strategy is to perform the correction process on a parity bit corresponding to each stripe with the continuously written data by using an original correction strategy in the RAIDS, wherein the original correction strategy is to perform the correction process on the parity bit while writing data.

10. The method according to claim 8, wherein determining the second correction strategy based on the count change information of each flag bit, comprises: in a case of determining one or more stripes with non-continuously written data based on the count change information of each flag bit, determining that the second correction strategy is to perform the correction process on the parity bit corresponding to each stripe with the non-continuously written data based on a second preset interval time cycle.

11. The method according to claim 8, wherein determining the second correction strategy based on the count change information of each flag bit, comprises:

in a case of determining, based on the count change information of each flag bit, that a count of data written to each stripe within a preset time range is less than a preset count threshold, determining that the second correction strategy is to perform the correction process on the parity bit corresponding to each stripe while reading data.

12. The method according to claim 3, further comprising:

in a case of determining that a hard disk is faulty, acquiring the flag bit state information corresponding to each hard disk location in each stripe, and performing a correction process on a parity bit corresponding to a stripe where the flag bit state information is not 0.

13. A computing device, comprising: a processor and a memory connected to the processor, wherein the memory is configured to store a computer program, the computer program comprises a program instruction, and the processor is configured to invoke the program instruction to perform the methods according to claims 1 to 12.

D01

D0  D1  D2  D3  P

FIG. 1

1010  1100  0011  1001

0110  1101  0101  0010

1111

FIG. 2

D01  D11  D21  Pnew

D0  D1  D2  D3  P

FIG. 3

D01  D11  D21  D31

D0  D1  D2  D3  P

FIG. 4

| Hard disk 0 | Hard disk 1 | Hard disk 2 | | Hard disk 0 | Hard disk 1 | Hard disk 2 |
|---|---|---|---|---|---|---|
| A | B | AB | Data write-through | C | B | AB |
| B | AB | A | → | B | AB | A |
| AB | A | B | | AB | A | B |

FIG. 5

| Hard disk 0 | Hard disk 1 | Hard disk 2 | | Hard disk 0 | Hard disk 1 | Hard disk 2 |
|---|---|---|---|---|---|---|
| C | × | AB | Hard disk abnormality | C | CxorAB | AB |
| B | AB | A | → | B | AB | A |
| AB | A | B | | AB | A | B |

FIG. 6

| Hard disk 0 | Hard disk 1 | Hard disk 2 | | Hard disk 0 | Hard disk 1 | Hard disk 2 |
|---|---|---|---|---|---|---|
| C | × | AB | Hard disk failure | C | CxorAB | AB |
| B | × | A | → | B | AxorB | A |
| AB | × | B | | AB | ABxorB | B |

FIG. 7

Acquire a data write request, where the data write request carries one or more pieces of data to be written and a hard disk location to be written corresponding to each piece of data to be written.　／ S801

In response to the data write request, write the one or more pieces of data to be written into the hard disk location to be written corresponding to each piece of data to be written, and adjust data bit state information corresponding to each hard disk location to be written.　／ S802

FIG. 8

Acquire hard disk state information of a plurality of hard disk locations corresponding to each hard disk in RAID5 and flag bit state information of a flag bit corresponding to each hard disk location.

S901

Perform a correction process on a parity bit corresponding to each stripe based on each piece of the hard disk state information and each piece of the flag bit state information, and after performing the correction process on each parity bit, perform a clearing process on the flag bit state information of the flag bit.

S902

FIG. 9

FIG. 10

FIG. 11

FIG. 12

## Mapped Count of Flag Bit

## Mapped Count of Flag Bit-Difference

FIG. 13

Second correction strategy

Acquire flag bit state information based on a first preset interval time cycle to collect a count of a flag bit

RAID card controller

Acquire a current load rate X1 of a RAID card

Continuous write operation exists → Perform a correction process on a parity bit corresponding to each stripe by using an original correction strategy in RAID5 within a preset time

Intermittent write operation → Perform the correction process on the parity bit corresponding to each stripe intermittently during a second preset time interval

Operation of reading dominant with occasional data writing → Correct the parity bit while reading data

First correction strategy

X1 is less than or equal to a preset threshold

Yes → Determine a resource invoking rate of 1-X1 to write back the parity bit of each stripe

No → Perform the correction process on the parity bit corresponding to each stripe by using a reserved fixed resource in the RAID5

Perform the correction process on the parity bit corresponding to each stripe where each hard disk location to be written is located while writing each piece of data to be written into a corresponding hard disk location to be written.

Perform the correction process on the parity bit corresponding to each stripe based on the first correction strategy and the second correction strategy

FIG. 14

1501
1502

Acquiring module — Writing module

Apparatus for improving write performance of a mirrored redundant array of independent disks RAID5

FIG. 15

Computing device

Data interface /1603

/1601

Memory

Processor /1602

FIG. 16

## INTERNATIONAL SEARCH REPORT

| International application No. |
| --- |
| **PCT/CN2023/116079** |

### A. CLASSIFICATION OF SUBJECT MATTER

G06F3/06(2006.01)i

According to International Patent Classification (IPC) or to both national classification and IPC

### B. FIELDS SEARCHED

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNKI, CNTXT, DWPI: 超聚变数字技术有限公司, 洪潮, 俞伟生, 磁盘阵列, RAID5, 位置, 地址, 直写; redundant array, independent disks, position, location, address, writ+, storage

### C. DOCUMENTS CONSIDERED TO BE RELEVANT

| Category* | Citation of document, with indication, where appropriate, of the relevant passages | Relevant to claim No. |
| --- | --- | --- |
| PX | CN 116009786 A (XFUSION DIGITAL TECHNOLOGIES CO., LTD.) 25 April 2023 (2023-04-25)<br>claims 1-13 | 1-13 |
| X | CN 111538460 A (JIANGSU XINSHENG INTELLIGENT TECHNOLOGY CO., LTD.) 14 August 2020 (2020-08-14)<br>description, paragraphs 0036-0127, and figures 1-13 | 1-13 |
| A | CN 103049222 A (NO.709 RESEARCH INSTITUTE OF CHINA SHIPBUILDING INDUSTRY CORPORATION) 17 April 2013 (2013-04-17)<br>entire document | 1-13 |
| A | CN 111782135 A (BEIJING JINGDONG SHANGKE INFORMATION TECHNOLOGY CO., LTD. et al.) 16 October 2020 (2020-10-16)<br>entire document | 1-13 |
| A | JP 2005078430 A (TOSHIBA CORP.) 24 March 2005 (2005-03-24)<br>entire document | 1-13 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 November 2023** | **22 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/116079**

| Patent document cited in search report | | | Publication date (day/month/year) | Patent family member(s) | | | Publication date (day/month/year) |
|---|---|---|---|---|---|---|---|
| CN | 116009786 | A | 25 April 2023 | None | | | |
| CN | 111538460 | A | 14 August 2020 | None | | | |
| CN | 103049222 | A | 17 April 2013 | None | | | |
| CN | 111782135 | A | 16 October 2020 | None | | | |
| JP | 2005078430 | A | 24 March 2005 | JP | 3790756 | B2 | 28 June 2006 |

Form PCT/ISA/210 (patent family annex) (July 2022)

**REFERENCES CITED IN THE DESCRIPTION**

**Patent documents cited in the description**

- CN 202211737093